# EUROPEAN PATENT APPLICATION

(11) **EP 4 717 572 A1**
(43) Date of publication of application: **01.04.2026**
(21) Application number: 25205300.4
(22) Date of filing: 29.09.2025
(51) Int. Cl.: B62J 17/10, B62J 41/00, B62K 11/04, B62M 7/04

(54) **STRADDLED VEHICLE**

(30) Priority: 30.09.2024 JP 2024170624
(71) Applicant: Yamaha Hatsudoki Kabushiki Kaisha, Iwata-shi, Shizuoka 438-8501 (JP)
(72) Inventor: TSUYA, Koji, Iwata-shi, Shizuoka 438-8501 (JP); MIYABE, Hiro, Iwata-shi, Shizuoka 438-8501 (JP); UEDA, Tetsuya, Iwata-shi, Shizuoka 438-8501 (JP)
(74) Representative: Stöckeler, Ferdinand

(57) **Abstract**

The present teaching aims to provide a straddled vehicle capable of suppressing a decrease in the amount of a radiator-passing wind stream in traveling, while suppressing an influence that heat caused by the radiator-passing wind stream gives to a rider and/or an electrical part disposed rearward of a radiator. A straddled vehicle 1 of the present teaching includes a radiator 60 including a radiator core 62, fans 70, a radiator cover 80, and a forward member 50. The radiator cover 80 covers at least a part of a wind stream amount increase region in which the amount of a radiator-passing wind stream increases in traveling. The radiator cover 80 has a rear partition wall portion 81, to restrict an inflow of the radiator-passing wind stream into a rearward space, and also has a pressure drop portion 83 for letting a part of the radiator-passing wind stream escape to the rearward space, the pressure drop portion 83 being disposed at a position opposed to the wind stream amount increase region.

## Description

### Technical Field

The present teaching relates to a straddled vehicle including a radiator.

### Background Art

Conventionally provided is a straddled vehicle including a radiator having a fan for maintaining a cooling performance of the radiator when the vehicle is stopped. Some straddled vehicles including a radiator having a fan are provided with a cover for covering the fan, in order to control a wind stream having passed through the fan. For example, Patent Literature 1 (PTL 1) listed below discloses a straddled vehicle including an air guide device configured to direct discharge air from a cooling fan downward and also to reduce a ventilation resistance of a traveling wind stream when the vehicle travels.

In the air guide device of PTL 1, an air guide cover for covering a fan has a plurality of outlets formed at positions dispersed in the circumferential direction (the rotation direction of the cooling fan). In traveling, a traveling wind stream (air flow) having passed through the fan is discharged through the plurality of outlets, and is discharged from the inside to the outside of the air guide cover while being dispersed in the circumferential direction. The air guide device of PTL 1 is described as being capable of reducing the ventilation resistance of the traveling wind stream in traveling, to improve the cooling efficiency of a radiator, and also capable of discharging the traveling wind stream while dispersing it in the circumferential direction of the fan, so that the discharged traveling wind stream diffuses in the outside air easily.

### Citation List

### Patent Literature

PTL 1: Japanese Patent Application Laid-Open No. 2017-141678

### Summary of Invention

### Technical Problem

In the configuration of PTL 1, however, in traveling, hot air flows rearward from where the fan cover is not disposed, which may give a heat influence to a rider and/or an electrical part disposed rearward of the radiator. Especially in a case of a vehicle having a full-cowl, in which inflow or outflow of a traveling wind stream into or out of the inside of the cowl is relatively small so that air having passed through the radiator tends to be trapped, a wind stream having passed through the radiator is likely to exert a heat influence on the electrical part. In the straddled vehicle, it is desired that a decrease in the amount of a wind stream passing through the radiator in traveling be suppressed.

The present teaching aims to provide a straddled vehicle capable of suppressing a decrease in the amount of a radiator-passing wind stream in traveling, while suppressing an influence that heat caused by the radiator-passing wind stream gives to a rider and/or an electrical part disposed rearward of the radiator.

### Solution to Problem

The inventors of the present teaching firstly considered covering a radiator core with a cover (a radiator cover), to suppress a rearward inflow of a radiator-passing wind stream, thus suppressing an influence that heat caused by the radiator-passing wind stream gives to a rider and/or an electrical part (rear component) disposed rearward of the radiator. To be specific, the inventors considered providing the radiator cover so as to cover a fan and the radiator core. The inventors obtained the findings that this configuration can suppress a rearward discharge of the radiator-passing wind stream, and can suppress the influence that the heat caused by the radiator-passing wind stream gives to the rider and/or the rear component.

In this respect, however, if the radiator cover is disposed so as to cover a back surface of the radiator core, the radiator-passing wind stream having passed through the radiator core hits the radiator cover in traveling, and thus at the space behind the radiator core, there is a reduced escape for the wind stream relative to the amount of a wind stream inflow, so that a pressure rises. Consequently, it turned out that the wind stream does not flow smoothly but stays in the radiator core, which may possibly reduce the amount of the radiator-passing wind stream.

Especially in a region (wind stream amount increase region) of the radiator core that, in a front view, does not overlap the fan and does not overlap either a front fork or a front fender (a forward member disposed farther forward than the radiator core, a traveling wind stream passes through the radiator and flows into the rearward without being hindered by the fan or the forward member. This is why a space behind the wind stream amount increase region has an increased pressure as compared to other regions. Consequently, as the pressure in the space behind the radiator rises, a wind stream can less smoothly flow to the radiator core.

The inventors of the present application conducted further studies in consideration of conditions including the above-mentioned pressure rise in the space behind the radiator core in traveling, and consequently arrived at the findings that it is possible to suppress a pressure rise in the space behind the radiator core and suppress a decrease in the amount of the radiator-passing wind stream, by providing an opening (pressure drop portion) at a position in the radiator cover, the position being opposed to a portion (wind stream amount increase region) of the radiator core where the amount of a wind stream increases in traveling, so that the radiator-passing wind stream can escape from the space behind the radiator core to a space rearward of the radiator cover.

Straddled vehicles according to aspects of the present teaching, which is accomplished based on the findings described above, have the following configuration.

A straddled vehicle of (1) includes: a radiator including a radiator core for cooling a coolant; a fan disposed farther rearward than the radiator core; and a forward member disposed farther forward than the radiator core, the forward member overlapping at least a part of the radiator core in a front view. The straddled vehicle is configured such that a fuel tank and/or an air cleaner is/are at least partially disposed farther upward than an engine and in a top view, disposed between left and right vehicle body frames extending from a head pipe to a seat. The straddled vehicle includes a radiator cover that covers at least a part of the radiator core and the fan from rearward. The radiator cover is configured to cover at least a part of a wind stream amount increase region in which the amount of a radiator-passing wind stream passing through the radiator core increases in traveling, the wind stream amount increase region being a region where the radiator core overlaps neither the fan nor the forward member in a front view. The radiator cover has a rear partition wall portion disposed so as to partition a space between the radiator core and a rear component disposed rearward of the radiator core into a forward space at the forward and a rearward space at the rearward, to restrict an inflow of the radiator-passing wind stream into the rearward space. The radiator cover has a pressure drop portion for letting a part of the radiator-passing wind stream escape to the rearward space, the pressure drop portion being disposed at a position opposed to the wind stream amount increase region.

The straddled vehicle of (1) is capable of restricting an inflow of the wind stream (radiator-passing wind stream), which has received heat while passing through the radiator core, into the rearward space. In the straddled vehicle of (1), the pressure drop portion is disposed at a position opposed to a portion (wind stream amount increase region) of the radiator core where the amount of the wind stream increases in traveling, and therefore it is possible to suppress a pressure rise in a space behind the radiator core (i.e., the forward space, which is behind the wind stream amount increase region), to consequently suppress a decrease in the amount of the wind stream passing through the radiator core in traveling (while the fan is not operating). As a result, the straddled vehicle of (1) is capable of suppressing a decrease in the amount of the radiator-passing wind stream in traveling, while suppressing an influence that heat caused by the radiator-passing wind stream gives to a rider and/or the rear component.

Thus, the straddled vehicle of (1), in which the pressure drop portion is disposed at a position opposed to the wind stream amount increase region so that a decrease in the amount of the radiator-passing wind stream in traveling is suppressed, is able to improve a cooling performance of the radiator in traveling, as compared to the case where the radiator cover has no pressure drop portion. The straddled vehicle of (1), in which the cooling performance of the radiator in traveling is improved, can downsize the radiator core in relative terms. Accordingly, the straddled vehicle of (1) provides expanded options for the position at which the radiator core is disposed. Here, for example, in a configuration having the radiator core disposed more forward than conventional, the position at which the radiator-passing wind stream is discharged when the vehicle is stopped (e.g., the position of an air discharge port of a cowl) can be set to a position that is more forward and far from the rider such that a hot air discharge position can be distant from the rider. Accordingly, the straddled vehicle of (1) is capable of further suppressing the influence that heat caused by the radiator-passing wind stream gives to the rider when the vehicle is stopped.

According to an aspect of the present teaching, the straddled vehicle may adopt the following configuration.

(2) In the straddled vehicle according to (1) above, the radiator cover has an upper partition wall portion disposed so as to cover at least a part of the upper end of the radiator core and so as to partition the forward space from an upward space upward of the forward space, to restrict an inflow of the radiator-passing wind stream into the upward space.

The straddled vehicle of (2) is capable of suppressing an inflow of the radiator-passing wind stream to the rearward, while suppressing an inflow of the radiator-passing wind stream to the upward of the radiator, where the fuel tank and the like are disposed and thus heat is likely to be trapped, to suppress an influence of heat on the rider and/or electrical parts disposed near the fuel tank, the air cleaner, and the like. When the vehicle is stopped, heat of the radiator tends to move upward. In this respect, the straddled vehicle of (2) is capable of suppressing an influence that heat of the radiator gives to the rider and/or an electrical part disposed upward of the radiator when the vehicle is stopped. Consequently, the straddled vehicle of (2) is capable of suppressing a decrease in the amount of the radiator-passing wind stream in traveling, while suppressing an influence that heat caused by the radiator-passing wind stream gives to the rider and/or the electrical part both when the vehicle is stopped and when the vehicle is traveling.

Moreover, the straddled vehicle of (2) makes it easy to control the radiator-passing wind stream downward and toward the lateral sides of the vehicle. In a case where the straddled vehicle of (2) is a vehicle including a cowl for example, it is easy to guide the radiator-passing wind stream toward an air discharge port provided in the cowl, and discharge the radiator-passing wind stream to the outside of the vehicle.

According to an aspect of the present teaching, the straddled vehicle may adopt the following configuration.

(3) In the straddled vehicle according to (1) or (2) above, the pressure drop portion includes an opening in the radiator cover formed so as to let a part of the radiator-passing wind stream escape to the rearward space.

The straddled vehicle of (3) is capable of restricting an inflow of the radiator-passing wind stream into the rearward space. In the straddled vehicle of (3), the pressure drop portion, which is an opening capable of letting a wind stream escape, is disposed at a position opposed to the wind stream amount increase region, and therefore it is possible to suppress a pressure rise in a space behind the radiator core (i.e., the forward space, which is behind the wind stream amount increase region), to consequently suppress a decrease in the amount of the wind stream passing through the radiator core in traveling (while the fan is not operating). As a result, the straddled vehicle of (3) is capable of suppressing a decrease in the amount of the radiator-passing wind stream in traveling, while suppressing an influence that heat caused by the radiator-passing wind stream gives to the rider and/or the rear component.

According to an aspect of the present teaching, the straddled vehicle may adopt the following configuration.

(4) In the straddled vehicle according to any of (1) to (3) above, when the fan rotates, the radiator-passing wind stream generated by rotation of the fan is guided in a guide direction by the radiator cover, the guide direction being either a left direction or a right direction, and the pressure drop portion is disposed, in a front view, at a position relative to the fan that exists in one of the left direction or the right direction, the one of the left direction or the right direction being a direction different from the guide direction.

In the straddled vehicle of (4), the radiator-passing wind stream generated by rotation of the fan when the vehicle is stopped is less likely to flow from the pressure drop portion into the rearward space. Consequently, the straddled vehicle of (4) is capable of suppressing a decrease in the amount of the radiator-passing wind stream in traveling, while further suppressing an influence that heat caused by the radiator-passing wind stream gives to the rider and/or the rear component when the vehicle is stopped.

According to an aspect of the present teaching, the straddled vehicle may adopt the following configuration.

(5) In the straddled vehicle according to any of (1) to (4) above, the fan comprises two fans disposed rearward of the radiator core, and the radiator cover covers a region ranging from one to the other of the two fans, with the pressure drop portion being disposed between the two fans.

In a case of adopting a large radiator in, for example, a vehicle having a large displacement, the straddled vehicle of (5), which can provide two fans, is capable of suppressing a decrease in the amount of the radiator-passing wind stream, while improving a radiator performance when the vehicle is stopped.

According to an aspect of the present teaching, the straddled vehicle may adopt the following configuration.

(6) In the straddled vehicle according to any of (1) to (5) above, the fan comprises two fans disposed left and right, the two fans being configured to rotate in different rotation directions, and when the fans rotate, the radiator-passing wind streams generated by rotation of the two fans are guided to lateral sides of the vehicle by the radiator cover.

In the straddled vehicle of (6), the radiator-passing wind streams generated by the fans when the vehicle is stopped can easily escape toward the outside of the vehicle. Consequently, the straddled vehicle of (6) is capable of suppressing a decrease in the amount of the radiator-passing wind stream in traveling, while more efficiently suppressing an influence that heat caused by the radiator-passing wind stream gives to the rider and/or the rear component.

According to an aspect of the present teaching, the straddled vehicle may adopt the following configuration.

(7) In the straddled vehicle according to any of (1) to (6) above, the forward member includes a front fork and a front fender, the front fork constituting a steering mechanism, the front fender being attached to a front wheel, and the radiator cover is configured to cover at least a part of the wind stream amount increase region where the radiator core overlaps none of the fan, the front fork, and the front fender in a front view, and to have the pressure drop portion disposed at a position opposed to the wind stream amount increase region.

In the straddled vehicle of (7), the pressure drop portion is disposed at a position opposed to a portion (in a front view, between the left and right front forks, and above the fender) of the radiator core where the amount of the wind stream increases in traveling, and therefore it is possible to suppress a pressure rise in a space behind the radiator core (i.e., the forward space, which is behind the wind stream amount increase region), to consequently suppress a decrease in the amount of the wind stream passing through the radiator core in traveling (while the fan is not operating). As a result, the straddled vehicle of (7) is capable of suppressing a decrease in the amount of the radiator-passing wind stream in traveling, while suppressing an influence that heat caused by the radiator-passing wind stream gives to the rider and/or the rear component.

According to an aspect of the present teaching, the straddled vehicle may adopt the following configuration.

(8) In the straddled vehicle according to any of (1) to (7) above, the fan is disposed so as to overlap at least a part of the forward member in a front view.

The straddled vehicle of (8), in which the fan is disposed so as to overlap at least a part of the forward member, can set a large area as the area of a region (wind stream amount increase region) of the radiator core through which the radiator-passing wind stream passes without being hindered by the fan or the forward component. Consequently, the straddled vehicle of (8) is capable of suppressing a decrease in the amount of the radiator-passing wind stream by allowing a sufficient amount of wind stream to pass through the radiator core in traveling, while suppressing an influence that heat caused by the radiator-passing wind stream gives to the rider and/or the rear component.

According to an aspect of the present teaching, the straddled vehicle may adopt the following configuration.

(9) In the straddled vehicle according to any of (1) to (8) above, the pressure drop portion has a wind stream direction change portion for changing a wind stream direction of the radiator-passing wind stream into a downward direction.

In the configuration of (9), the wind stream escaping rearward from the pressure drop portion is likely to flow downward. Accordingly, in the straddled vehicle of (9), the wind stream discharged so as to escape rearward can easily go away through a gap between a road surface and the vehicle body due to a pressure difference under the vehicle body in traveling. Especially when the engine is arranged in a forward leaning posture, a wind stream flowing downward is likely to flow downward while being led by an inclined surface (forward surface) of the engine. Consequently, the straddled vehicle of (9) is capable of suppressing a decrease in the amount of the radiator-passing wind stream in traveling, while further suppressing an influence that heat caused by the radiator-passing wind stream gives to the rider and/or the rear component.

According to an aspect of the present teaching, the straddled vehicle may adopt the following configuration.

(10) The straddled vehicle according to any of (1) to (9) above further includes a cowl that covers a lateral side of the radiator core, the cowl having an upper air discharge port and a lower air discharge port, the upper air discharge port being formed at a lateral side of the radiator cover, the lower air discharge port being formed farther downward than the upper air discharge port. When the vehicle is stopped, the radiator-passing wind stream generated by operation of the fan is guided by the radiator cover, to be discharged toward the lateral side of the vehicle through the upper air discharge port while being discharged downward through the lower air discharge port, and in traveling, the radiator-passing wind stream guided by the radiator cover is discharged through the upper air discharge port so as to flow rearward of the vehicle due to a pressure difference caused by a flow rate difference between the radiator-passing wind stream and a traveling wind stream flowing from the forward to the rearward of the upper air discharge port.

In the straddled vehicle of (10), when the vehicle is stopped, the radiator-passing wind stream is discharged to the lateral side of the vehicle through the upper air discharge port while being discharged downward through the lower air discharge port, and in traveling, the radiator-passing wind stream is discharged so as to flow rearward of the vehicle through the upper air discharge port. With this, an influence of the radiator-passing wind stream on the rider can be suppressed in a vehicle having the cowl. Consequently, in a case where heat tends to be trapped inside the cowl of the vehicle, the straddled vehicle of (10) is capable of suppressing a decrease in the amount of the radiator-passing wind stream in traveling, while suppressing an influence that heat caused by the radiator-passing wind stream gives to the rider and/or the rear component both when the vehicle is stopped and when the vehicle is traveling.

According to an aspect of the present teaching, the straddled vehicle may adopt the following configuration.

(11) The straddled vehicle according to any of (1) to (10) above further includes a cowl that covers a lateral side of the radiator core, the cowl having an upper air discharge port formed at a lateral side of the radiator cover. The radiator cover is disposed such that at least one of the left and right ends thereof is connected to the upper air discharge port.

In the straddled vehicle of (11), the radiator-passing wind stream can be guided to the upper air discharge port efficiently. Consequently, in a case where heat tends to be trapped inside the cowl of the vehicle, the straddled vehicle of (11) is capable of suppressing a decrease in the amount of the radiator-passing wind stream in traveling, while suppressing an influence that heat caused by the radiator-passing wind stream gives to the rider and/or the rear component both when the vehicle is stopped and when the vehicle is traveling.

According to an aspect of the present teaching, the straddled vehicle may adopt the following configuration.

(12) In the straddled vehicle according to any of (1) to (11) above, the radiator cover has its lower end disposed farther downward than the upper end of a cylinder head.

In a case of the engine arranged in a forward leaning posture, the straddled vehicle of (12) makes the radiator-passing wind stream more likely to flow downward along the forward surface of the engine, to restrict an inflow of the radiator-passing wind stream to the upward of the engine. Consequently, the straddled vehicle of (12) is capable of suppressing a decrease in the amount of the radiator-passing wind stream in traveling, while suppressing an influence that heat caused by the radiator-passing wind stream gives to the rider and/or the rear component.

### [Regarding Straddled Vehicle]

The "straddled vehicle" refers to a vehicle of a type having a seat on which a rider sits astride. Examples of the straddled vehicle include moped type, off-road type, and on-road type motorcycles. The straddled vehicle is not limited to a motorcycle, and for example, may be a four-wheeled motor vehicle, a motor tricycle, an all-terrain vehicle (ATV), and the like. The motor tricycle may include two front wheels and one rear wheel, or may include one front wheel and two rear wheels. A driving wheel of the straddled vehicle may be a rear wheel, or may be a front wheel. The driving wheel of the straddled vehicle may be both the rear wheel and the front wheel. The straddled vehicle may be configured to be capable of turning with a leaning posture.

In this Description, a state where the straddled vehicle is upright is described. The "front view" as used herein refers to a front view of the straddled vehicle. The "side view" as used therein refers to a side view of the straddled vehicle.

The "left-right direction" as used herein refers to the left-right direction (vehicle width direction) in a front view, the "leftward" refers to leftward in a front view, and the "rightward" refers to rightward in a front view. The "forward-rearward direction" as used herein refers to the forward-rearward direction of the straddled vehicle, the "forward" refers to forward of the straddled vehicle, and the "rearward" refers to rearward of the straddled vehicle. The "up-down direction" as used herein refers to the up-down direction of the straddled vehicle, the "upward" refers to upward of the straddled vehicle, and the "downward" refers to downward of the straddled vehicle.

The straddled vehicle, for example, includes an engine, a head pipe, a seat, a step, a fuel tank, an air cleaner, a vehicle body frame, a steering mechanism, a front wheel, a rear wheel, and a front fender.

The engine includes a cylinder head, for example. The engine is arranged in a forward leaning posture with a cylinder leaning forward, for example. The engine is a water-cooled type engine, for example.

The "steering mechanism" is for controlling a direction in which the vehicle travels through a rider's manipulation on a handlebar, for example. The steering mechanism includes a steering shaft and a front fork, for example. The steering mechanism is supported by the vehicle body frame via the head pipe, for example. The steering shaft is received through the head pipe, and is supported by the vehicle body frame in such a manner that the steering shaft can rotate, for example. The front fork supports the front wheel. The front fork comprises a pair of fork legs disposed left and right of the front wheel, respectively.

The front fender covers a part of the front wheel in its circumferential direction at a location upward of the front wheel. The seat is disposed at the rearward of the fuel tank. The fuel tank is disposed at the upward of the engine, for example. The air cleaner is disposed at the upward of the engine, for example.

The straddled vehicle includes the vehicle body frame, which comprises left and right vehicle body frames extending from the head pipe to the seat, for example. In the straddled vehicle, the step, on which the rider puts his/her foot, is disposed at the downward of the seat, for example. In the straddled vehicle, the step is located farther rearward than a crankshaft of the engine, for example. The straddled vehicle encompasses a vehicle on which a rider rides astride the seat with the fuel tank between his/her knees (knee grip). In other words, the straddled vehicle does not encompass a vehicle of a scooter type on which a rider rides with his/her feet placed on a foot board.

The wording "a fuel tank and/or an air cleaner is/are disposed farther upward than an engine and in a top view, disposed between left and right vehicle body frames extending from a head pipe to a seat, or disposed so as to extend to the left and right vehicle body frames" means that at least one of the fuel tank or the air cleaner is disposed farther upward than the engine and in a top view, disposed between the left and right vehicle body frames, or disposed so as to extend to the left and right vehicle body frames. The straddled vehicle encompasses a straddled vehicle configured such that at least one of the fuel tank or the air cleaner is disposed farther upward than the engine, for example. The straddled vehicle encompasses a straddled vehicle configured such that at least one of the fuel tank or the air cleaner is disposed so as to extend to the left and right vehicle body frames in a top view, for example. The straddled vehicle encompasses a straddled vehicle configured such that at least one of the fuel tank or the air cleaner is disposed between the left and right vehicle body frames in a top view, for example.

The straddled vehicle may include a cowl, for example. The straddled vehicle may be a full-cowl vehicle, for example. The straddled vehicle may be a vehicle of a type having no cowl, for example. One of examples of the full-cowl straddled vehicle is a vehicle of a super-sports type. One of examples of a straddled vehicle of the type having no cowl is a vehicle of a naked type.

The "cowl" is an exterior part that covers the vehicle body and the engine, for example. Types of a straddled vehicle having the cowl include, for example, a full-cowl type and a half-cowl type, which depends on a range where the cowl is provided. The full-cowl type is a type of a vehicle including a cowl having a shape that covers the entire vehicle body including the engine, for example. The half-cowl type is a type of a vehicle including a cowl that covers an upper portion of the vehicle body, for example.

The cowl may be configured as a single part, or the cowl may be composed of a plurality of parts. Examples of the cowl include an upper cowl, which is disposed in an upper portion of the vehicle body, an under cowl, which covers a lower portion of the vehicle body, and a middle cowl, which is disposed farther downward than the upper cowl.

The cowl may have a forward opening portion for taking a traveling wind stream in, for example. The cowl may have an air discharge port for discharging a wind stream (radiator-passing wind stream) having passed through the radiator core to the outside, for example. For example, the cowl may be configured to cover a lateral side of the radiator core and to have an upper air discharge port formed at a lateral side of the radiator cover. For example, the upper air discharge port may comprise upper air discharge ports disposed left and right of the vehicle, respectively. For example, the cowl may have a lower air discharge port for discharging a radiator-passing wind stream from the downward of the vehicle body. For example, the lower air discharge port may comprise lower air discharge ports disposed left and right of the vehicle, respectively.

The "forward member" is a member that is disposed farther forward than the radiator core and that overlaps at least a part of the radiator core in a front view. Examples of the forward member include a front fork, a front fender, and a front wheel.

The "radiator" is a device for cooling a coolant that has been heated while passing through the inside of the engine. The radiator includes a radiator core, for example.

As the radiator, for example, there are a cross-flow type radiator that makes a coolant flow in the left-right direction and a vertical-flow type radiator that makes a coolant flow from the upward to the downward. The cross-flow type radiator includes side tanks disposed at the left and right ends of the radiator core, respectively. In the cross-flow type radiator, the coolant having been heated by the engine flows into one of the left and right side tanks. While passing through the radiator core, the coolant is cooled, then flows into the other side tank, and then returns to the engine again. The vertical-flow type radiator includes an upper tank and a lower tank, the upper tank being disposed at the upper end of the radiator core, the lower tank being disposed at the lower end of the radiator core. In the vertical-flow type radiator, the coolant having been heated by the engine flows into the upper tank. While passing through the radiator core, the coolant is cooled, then flows into the lower tank, and then returns to the engine again. The radiator may be one of the cross-flow type, or may be one of the vertical-flow type.

The "radiator core" includes a tube through which a coolant flows, and a heat dissipation fin, for example. The radiator core is arranged in a forward leaning posture with its upper end leans forward, for example. The radiator core is disposed farther forward than the engine, for example. The radiator core is disposed farther downward than the fuel tank, for example.

The "wind stream amount increase region" is a portion of the radiator core. The wind stream amount increase region is a region where the radiator core overlaps neither the fan nor the forward member in a front view. The wind stream amount increase region is a portion of the radiator core in which the amount of the radiator-passing wind stream increases in traveling. The wind stream amount increase region is a portion in which the radiator core overlaps none of the fan, the front fork, and the front fender in a front view, for example. In other words, for example, the wind stream amount increase region is a portion of the radiator core in which, in traveling, the traveling wind stream hits the radiator core without being hindered by another member (forward member) at the forward of the radiator core, and the radiator-passing wind stream passing through the radiator core flows rearward without being hindered by the fan.

The "fan" generates a wind stream passing through the radiator core. The fan is disposed more rearward than the radiator core and adjacent to the radiator core. The fan is disposed so as to at least partially overlap the radiator core in a front view, for example.

The fan is configured to operate (rotate) when the speed is not more than a specified speed, for example. Thus, for example, when the vehicle is traveling, the fan stops operating. The specified speed is a speed at which almost no traveling wind stream occurs, for example.

The number of fans may be one, or may be two, for example. The rotation direction of the fan may be counterclockwise in a front view, or may be clockwise in a front view, for example. The rotation direction of the fan is selectable as appropriate such that the radiator-passing wind stream can be easily discharged to the lateral side of the vehicle in accordance with the position of the fan relative to the radiator core, for example. For example, if the fan is disposed left relative to the center line of the vehicle (relative to the center of the radiator core) in a front view, rotating the fan counterclockwise facilitates discharging of the radiator-passing wind stream toward the left (lateral side of the vehicle). For example, if the fan is disposed right relative to the center line of the vehicle in a front view, rotating the fan clockwise facilitates discharging of the radiator-passing wind stream toward the right (lateral side of the vehicle).

In a case of having two fans, for example, the fans may be disposed side by side in the left-right direction. In a case of having two fans disposed side by side in the left-right direction, for example, the fans may be arranged symmetrically with respect to the left-right center line of the radiator core, or may be arranged asymmetrically with respect to the left-right center line.

The "rear component" is an electrical part disposed farther rearward than the radiator core, for example. The rear component is an electrical part disposed at such a position that the electrical part can potentially be influenced by a radiator-passing wind stream having passed through the radiator core when the radiator-passing wind stream flows rearward, for example. Examples of the rear component include an engine control unit, a tail lamp, a headlight unit, a body control module, a fuel pomp, and a side stand switch.

The "radiator-passing wind stream" is a wind stream having passed through the radiator core. Whether the radiator-passing wind stream is a wind stream generated by operation of the fan or a wind stream caused by the traveling wind stream does not matter, for example.

### [Regarding Radiator Cover]

The "radiator cover" is a cover that covers the radiator core. The radiator cover covers at least a part of the radiator core and the fan from the rear. The radiator cover has one or more partition wall portions for partitioning a space around the radiator core, for example. For example, the radiator cover has a rear partition wall portion. For example, the radiator cover has an upper partition wall portion. The radiator cover functions as a duct for leading the radiator-passing wind stream, for example.

The "rear partition wall portion" is disposed so as to partition a space rearward of the radiator core into a forward space at the forward and a rearward space at the rearward. In other words, the rear partition wall portion is a portion of the radiator cover, the portion being disposed rearward of the radiator core, for example.

The "upper partition wall portion" is a portion of the radiator cover that covers at least a part of the upper end of the radiator core. The upper partition wall portion is disposed so as to partition the forward space from an upward space upward of the forward space, for example. In other words, the upper partition wall portion is a portion of the radiator cover, the portion being formed so as to extend from the rear partition wall portion to the upper end of the radiator core, for example. The upper partition wall portion can be considered as a portion that restricts the radiator-passing wind stream having flowed into the forward space from flowing into the upward space, for example.

### [Regarding Range of Radiator Cover]

A range in the up-down direction where the radiator cover is disposed is desirably such a range that an inflow of the radiator-passing wind stream into the rearward and upward spaces can be suppressed, for example. The radiator cover may be configured such that its upper end locates more upward than the radiator core, for example. The radiator cover may be configured such that its lower end locates more downward than a cylinder head in order that a radiator-passing wind stream having flowed rearward from below the radiator cover can be led downward along a forward surface of the engine, for example.

For example, the radiator cover may be configured to be ranged in the left-right direction in such a manner that a radiator-passing wind stream can be easily guided to the lateral sides of the vehicle. For example, in a case of a vehicle having a cowl and an upper air discharge port formed in the cowl, the radiator cover may be disposed such that at least one of the left and right ends thereof is connected to the upper air discharge port.

The wording "the radiator cover is disposed such that at least one of the left and right ends thereof is connected to the upper air discharge port" means that, for example, the radiator cover is configured such that at least one of the left end or the right end thereof extends to a position adjacent to the upper air discharge port and such that a radiator-passing wind stream, the inflow of which into the rearward space has been hindered by the radiator cover, can be guided to the upper air discharge port.

The "guide direction" is a direction in which, when the fan rotates, a radiator-passing wind stream generated by rotation of the fan is guided by the radiator cover, for example. The guide direction is the left direction or the right direction, for example. The guide direction is, out of the left direction and the right direction, a direction in which a larger amount of a radiator-passing wind stream generated by rotation of one fan is guided by the radiator cover, for example. For example, if the radiator-passing wind stream generated by rotation of one fan is guided in more amount in the right direction than in the left direction, it can be considered that the right direction is the guide direction. The "position relative to ... a direction different from the guide direction" refers to the leftward or the rightward of the fan, for example. If, for example, a radiator-passing wind stream generated by rotation of the fan is guided in the left direction by the radiator cover, the "position relative to ... a direction different from the guide direction" is a position relative to the fan that exists in the right direction.

The "pressure drop portion" includes an opening in the radiator cover formed so as to let a part of the radiator-passing wind stream escape to the rearward space. The pressure drop portion may include a plurality of openings, for example. The pressure drop portion may include a single opening, for example. The pressure drop portion may have a wind stream direction change portion provided in a single opening so that the opening is partitioned into a plurality of openings, for example. The pressure drop portion may include one or more slit-like openings, for example.

The pressure drop portion is disposed at a position opposed to the wind stream amount increase region. The pressure drop portion may be formed so as to fit within a region opposed to the wind stream amount increase region, for example. The pressure drop portion may be formed so as to extend from the region opposed to the wind stream amount increase region to another region (so as to extend beyond the region opposed to the wind stream amount increase region), for example. The pressure drop portion may be formed so as to partially overlap the fan in a front view, for example.

The pressure drop portion can be disposed, in a front view, at a position relative to the fan that exists in one of the left direction or the right direction, the one of the left direction or the right direction being a direction different from the guide direction, for example. If, for example, a radiator-passing wind stream generated by rotation of the fan is guided leftward by the radiator cover, the pressure drop portion can be disposed rightward relative to the fan in a front view. If, for example, a radiator-passing wind stream generated by rotation of the fan is guided in the right direction by the radiator cover, the pressure drop portion can be disposed leftward relative to the fan in a front view.

If, for example, two fans configured to rotate in different rotation directions are provided, and radiator-passing wind streams generated by rotation of these fans are guided to the lateral sides of the vehicle by the radiator cover; the pressure drop portion can be disposed at a position between the two fans in a front view. More specifically, if, for example, two fans configured to rotate in different rotation directions are provided left and right, and a radiator-passing wind stream generated by rotation of the left fan is guided in the left direction by the radiator cover while a radiator-passing wind stream generated by rotation of the right fan is guided in the right direction by the radiator cover; the pressure drop portion can be disposed such that, in a front view, its position relative to the left fan is a position (at the right) toward the direction (right direction) different from the guide direction (left direction) for the left fan, and its position relative to the right fan is a position (at the left) toward the direction (left direction) different from the guide direction (right direction) for the right fan. That is, the pressure drop portion can be disposed between the two fans.

The "wind stream direction change portion" changes a wind stream direction of the radiator-passing wind stream into a downward direction. The wording "changes a wind stream direction of the radiator-passing wind stream into a downward direction" means that the direction of a wind stream in passing through the radiator core is changed so as to be inclined more downward than the current direction, for example. The wind stream direction change portion is disposed in the pressure drop portion, for example. The wind stream direction change portion is, for example, a fin that changes, into a downward direction, a wind stream direction of a radiator-passing wind stream flowing from the forward space into the rearward space via the pressure drop portion. The wind stream direction change portion can be configured as one or more fins provided to the pressure drop portion formed as a single opening in the radiator cover, for example. If, for example, the wind stream direction change portion is provided as a fin, configuring the fin such that its rearward end leans downward can change the wind stream direction of the radiator-passing wind stream into a downward direction.

The wind stream direction change portion is not limited to a configuration having a fin provided in the pressure drop portion, for example. The wind stream direction change portion may be configured by, for example, forming a part of the radiator cover into a protruding shape and forming an opening (pressure drop portion) corresponding to the protruding portion so as to face downward, for letting a radiator-passing wind stream discharged downward.

### [Flow of Radiator-Passing Wind Stream When Vehicle is Stopped]

A flow of the radiator-passing wind stream when the vehicle is stopped will now be described. The wording "when the vehicle is stopped" as used herein refers to when the vehicle is stopped, for example. When the vehicle is stopped, the fan operates, for example.

When the vehicle is stopped, for example, a radiator-passing wind stream passing from the forward to the rearward of the radiator core is generated by operation of the fan. When the vehicle is stopped, for example, the radiator-passing wind stream flows rearward from a region in the radiator core, at the rear of which the fan is disposed. When the vehicle is stopped, the radiator cover disposed rearward of the fan restricts an inflow of the radiator-passing wind stream into the rearward space so that the radiator-passing wind stream is guided to the lateral sides and downward of the vehicle. When, for example, the fan operates while the vehicle is moving at such a speed that almost no traveling wind stream is generated, a radiator-passing wind stream flows in the same manner as when the vehicle is stopped.

### [Flow of Radiator-Passing Wind Stream in Traveling]

A flow of the radiator-passing wind stream in traveling will now be described. The wording "in traveling" as used herein refers to when a/the vehicle travels at such a speed that some traveling wind stream is generated, for example. For example, the wording "in traveling" as used herein does not encompass a state where the vehicle is moving at such a speed that almost no traveling wind stream is generated. For example, the wording "in traveling" as used herein does not encompass a state where the vehicle is moving at such a speed that the fan operates. For example, the wording "in traveling" as used herein means when the vehicle is moving at a speed not less than a specified speed. In traveling, for example, the fan stops operating.

In traveling, for example, a traveling wind stream causes a radiator-passing wind stream. In traveling, for example, the traveling wind stream passes through the wind stream amount increase region of the radiator core. In traveling, the traveling wind stream (radiator-passing wind stream) having passed through the radiator core is restricted from flowing into the rearward space by the radiator cover disposed rearward of the fan, and is guided to the lateral sides and downward of the vehicle.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching as defined by the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching can provide a straddled vehicle capable of suppressing a decrease in the amount of a radiator-passing wind stream in traveling, while suppressing an influence that heat caused by the radiator-passing wind stream gives to a rider and/or an electrical part disposed rearward of the radiator.

### Brief Description of Drawings

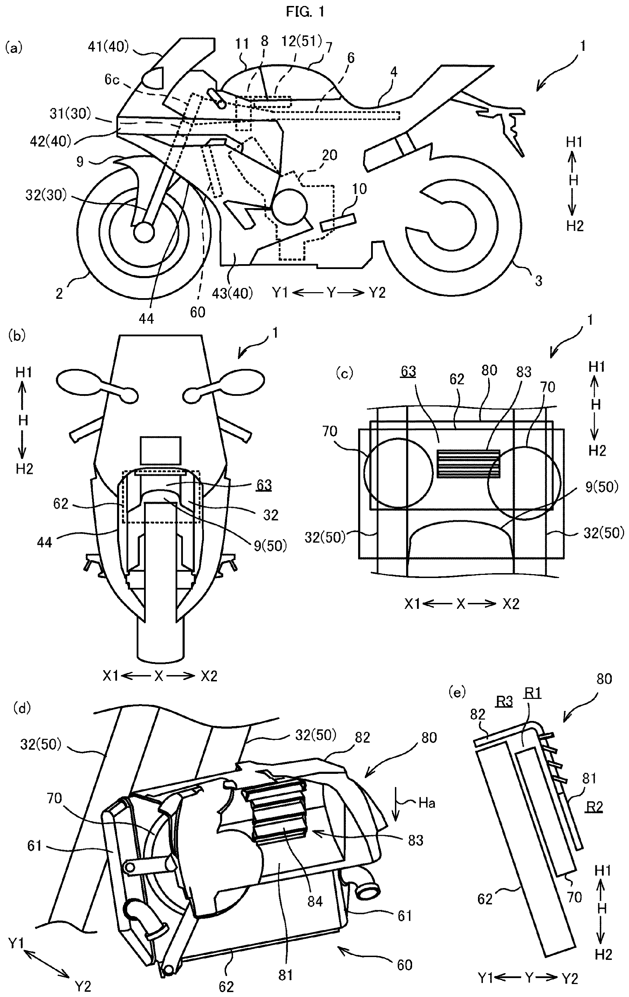

[FIG. 1] (a) is a right side view of a straddled vehicle according to an embodiment of the present teaching. (b) is a front view of the straddled vehicle illustrated in FIG. 1(a). (c) is a front view showing the position of a pressure drop portion of the straddled vehicle illustrated in FIG. 1(a). (d) is a perspective view showing a radiator and a radiator cover of the straddled vehicle illustrated in FIG. 1(a). (e) schematically shows a radiator core, a fan, and the radiator cover in a side view of the straddled vehicle illustrated in FIG. 1(a).

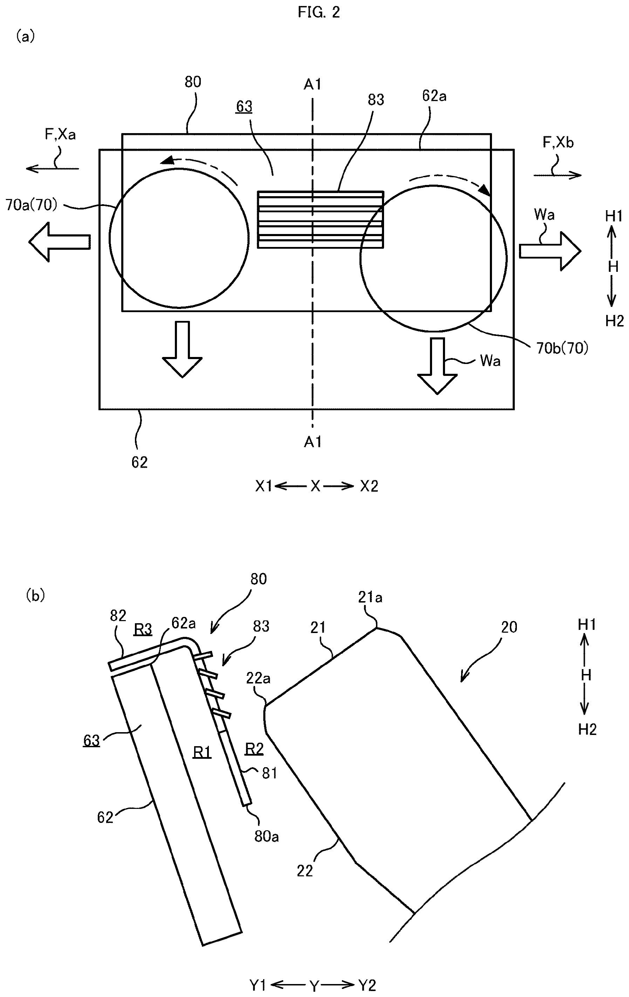

[FIG. 2] (a) schematically shows the radiator core, the fans, and the radiator cover in a front view of the straddled vehicle illustrated in FIG. 1(a). (b) shows a cross section as taken along the line A1-A1 of FIG. 2(a).

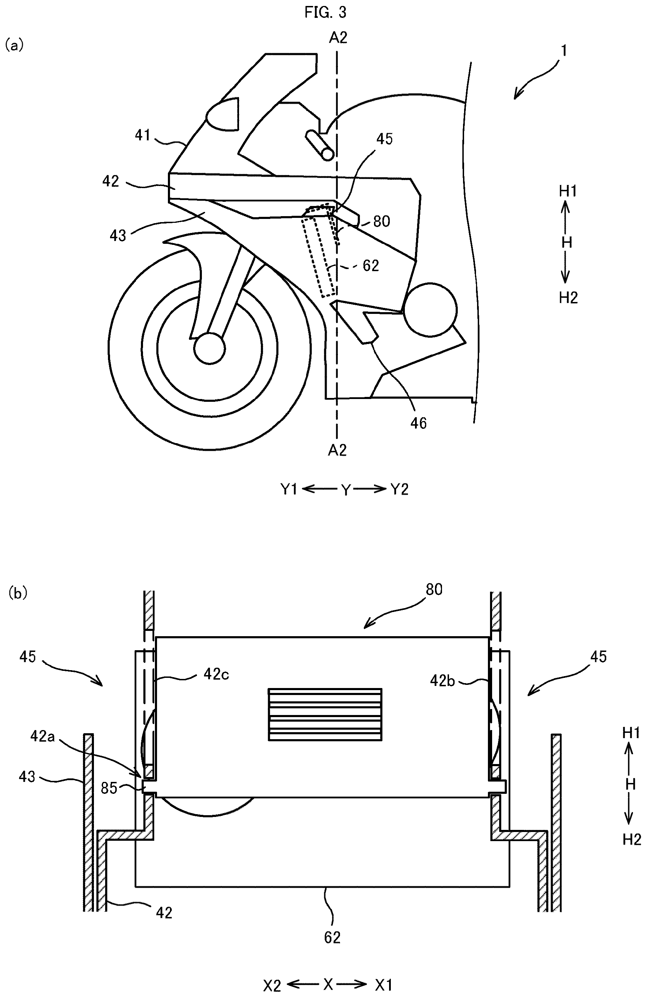

[FIG. 3] (a) is a side view showing the positions of an upper air discharge port and a lower air discharge port of the straddled vehicle illustrated in FIG. 1(a). (b) is a rear view as cut along the line A2-A2 of FIG. 3(a).

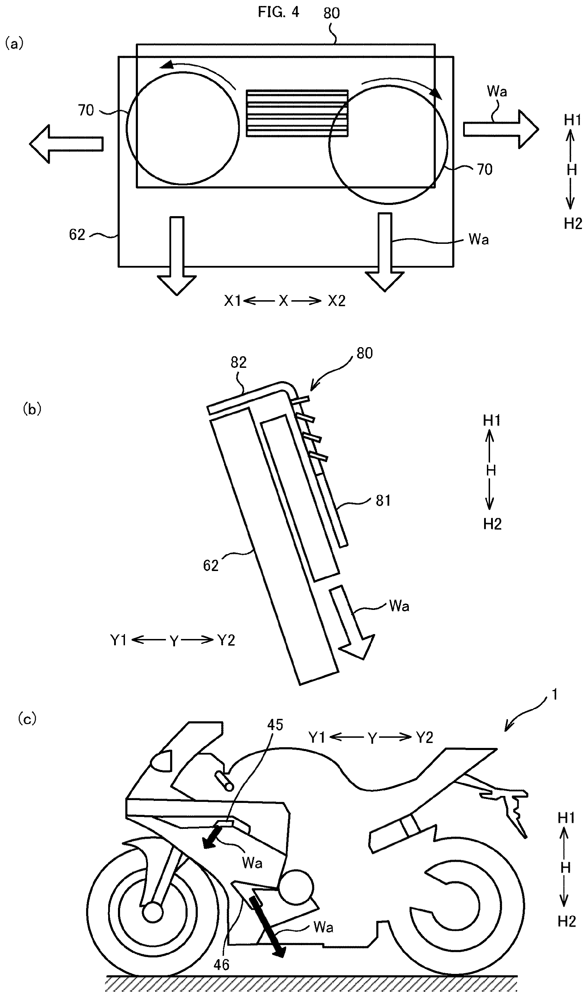

[FIG. 4] A diagram showing a flow of a radiator-passing wind stream when the straddled vehicle illustrated in FIG. 1(a) is stopped. (a) schematically shows flows of the radiator-passing wind streams guided by the radiator cover in a front view. (b) schematically shows a flow of the radiator-passing wind stream guided by the radiator cover in a side view. (c) is a side view showing the positions and directions in which the radiator-passing wind streams guided by the radiator cover are discharged to the outside of the vehicle.

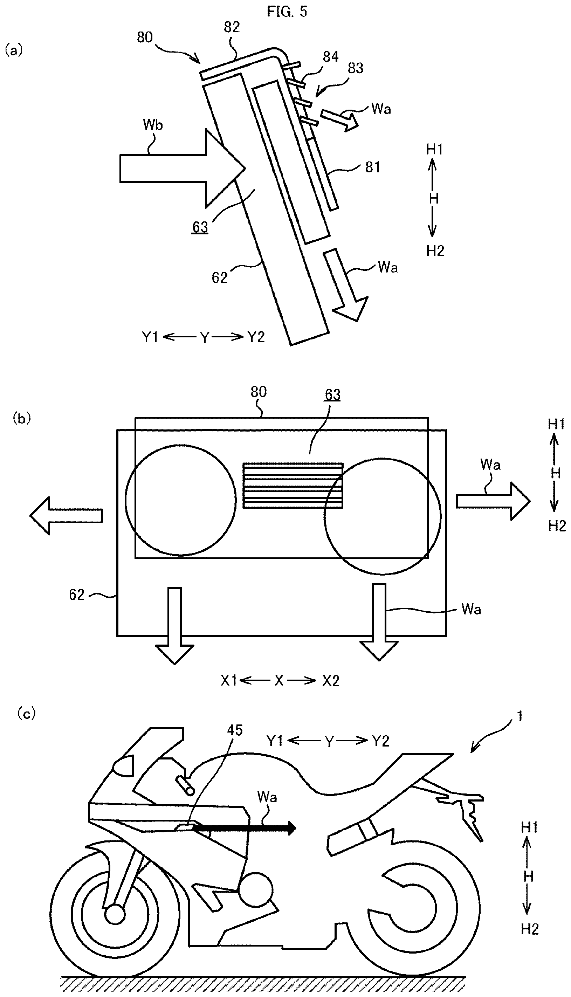

[FIG. 5] A diagram showing a flow of the radiator-passing wind stream when the straddled vehicle illustrated in FIG. 1(a) travels. (a) schematically shows flows of the radiator-passing wind streams guided by the radiator cover in a side view. (b) schematically shows flows of the radiator-passing wind streams guided by the radiator cover in a front view. (c) is a side view showing the position and direction in which the radiator-passing wind stream guided by the radiator cover is discharged to the outside of the vehicle.

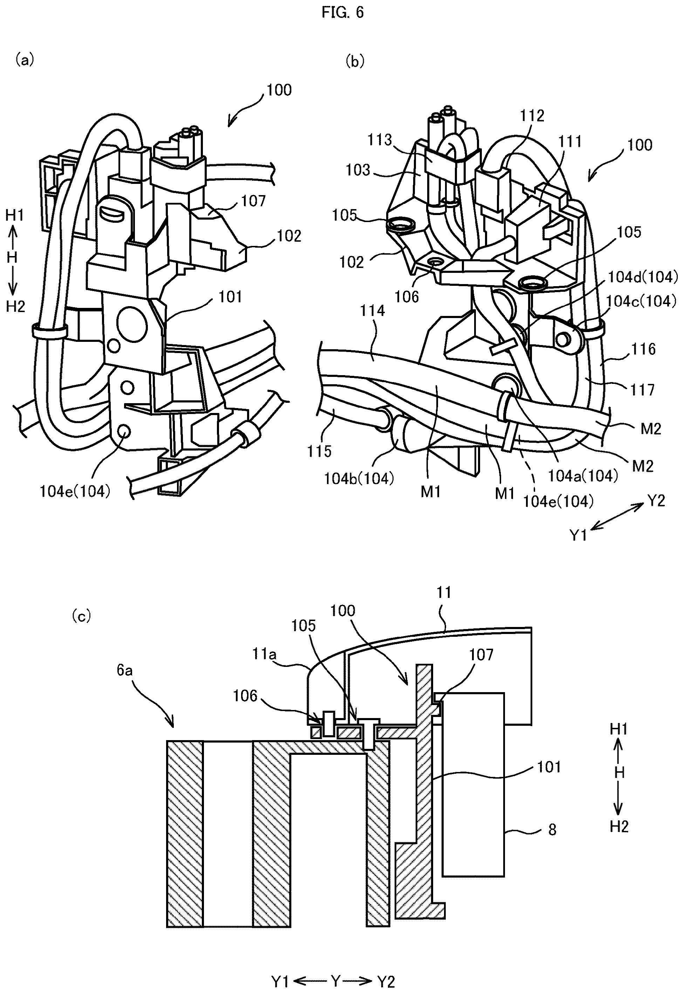

[FIG. 6] A diagram showing a multi-functional part provided in the straddled vehicle illustrated in FIG. 1(a). (a) is a perspective view of the multi-functional part, which holds connectors and harnesses, as viewed from the rear. (b) is a perspective view of the multi-functional part, which holds the connectors and the harnesses, as viewed from the front. (c) schematically shows a state where the multi-functional part is attached to front vehicle body frames.

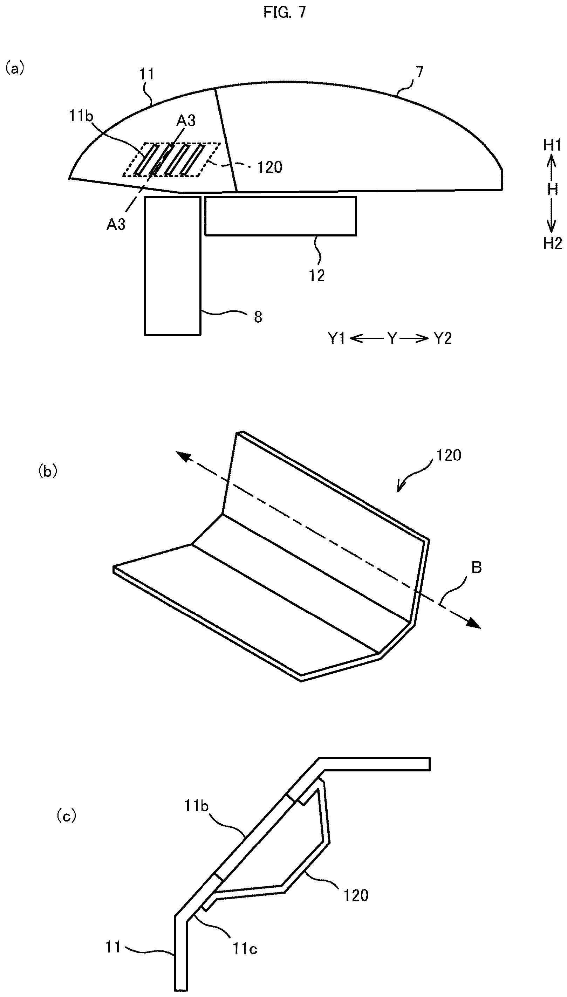

[FIG. 7] (a) is a side view showing the positions of a hole portion provided in a tank cover, an air cleaner, and a battery of the straddled vehicle illustrated in FIG. 1(a). (b) is a perspective view showing a water receiving part provided to the tank cover of the straddled vehicle illustrated in FIG. 1(a). (c) shows a cross section as taken along the line A3-A3 of FIG. 7(a).

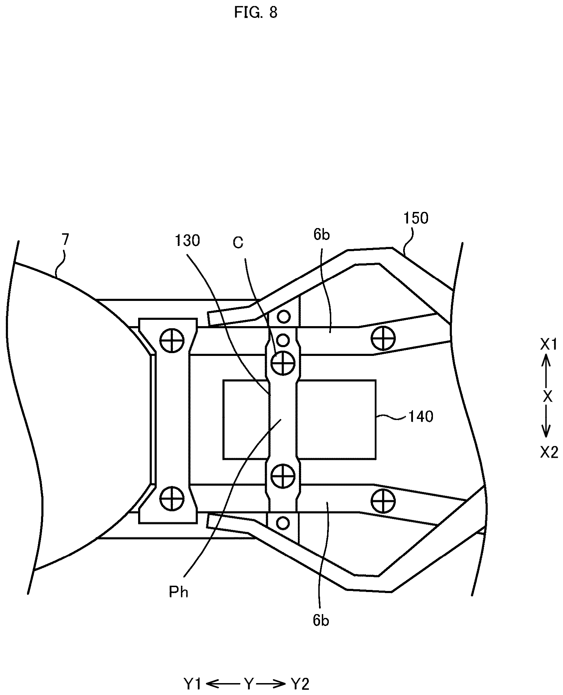

[FIG. 8] A plan view showing an under-seat area of the straddled vehicle illustrated in FIG. 1(a).

### Description of Embodiments

In the following, details of a straddled vehicle 1 according to an embodiment of the present teaching will be described with reference to the drawings. An embodiment described below is merely an example. The present teaching should not be construed as being limited in any way by the embodiment described below.

### [Configuration of Straddled Vehicle]

As shown in FIG. 1(a), the straddled vehicle 1 includes a front wheel 2, a rear wheel 3, a seat 4, a head pipe 6c, a vehicle body frame 6, a fuel tank 7, an air cleaner 8, a front fender 9, a step 10, an engine control unit 12, an engine 20, a steering mechanism 30, a cowl 40, and a radiator 60. As shown in FIG. 1(c), the straddled vehicle 1 includes two fans 70 and a radiator cover 80.

The steering mechanism 30 includes a steering shaft 31 and a front fork 32. The steering mechanism 30 is supported by the vehicle body frame 6 via the head pipe 6c. The steering shaft 31 is received through the head pipe 6c, and is supported by the vehicle body frame 6 in such a manner that the steering shaft 31 can rotate. The front fork 32 supports the front wheel 2. The front fork 32 comprises a pair of front forks 32 disposed left and right of the front wheel 2, respectively.

The front fender 9 covers a part of the front wheel 2 in its circumferential direction at a location upward of the front wheel 2. The seat 4 is disposed at the rearward Y2 of the fuel tank 7. The air cleaner 8 and the fuel tank 7 are disposed at the upward H1 of the engine 20.

As shown in FIG. 1(a), in the straddled vehicle 1, the vehicle body frame 6, which comprises left and right vehicle body frames 6, extends from the head pipe 6c to the seat 4. In the straddled vehicle 1, the fuel tank 7 is disposed at the upward H1 of the engine 20, and in a top view, is disposed so as to span the left and right vehicle body frames 6. The air cleaner 8 is disposed at the upward H1 of the engine 20, and in a top view, is disposed between the left and right vehicle body frames 6. In the straddled vehicle 1, the step 10, on which a rider puts his/her foot, is disposed at the downward H2 of the seat 4.

As shown in FIG. 2(b), the engine 20 includes a cylinder head 21. As shown in FIG. 2(b), the engine 20 is disposed in a forward leaning posture.

The front forks 32, which are included in the steering mechanism 30, and the front fender 9, which is attached to the front wheel 2, are disposed at the forward Y1 of the radiator core 62, and constitute a forward member 50, which overlaps at least a part of the radiator core 62 in a front view.

As shown in FIG. 1(a), the straddled vehicle 1 is a full-cowl type vehicle including the cowl 40, which covers lateral sides of the radiator core 62 and the engine 20 and has such a shape that its coverage ranges up to a lower portion of the vehicle body. In the straddled vehicle 1 of this embodiment, the cowl 40 is composed of a plurality of parts. To be specific, the cowl 40 is composed of an upper cowl 41, a middle cowl 42, and an under cowl 43.

The cowl 40 has a plurality of openings serving as a wind stream intake port or an air discharge port. More specifically, as shown in FIG. 1(a) and FIG. 1(b), in the straddled vehicle 1 of this embodiment, the cowl 40 has a forward opening portion 44 for taking a traveling wind stream into the inside. As shown in FIG. 1(a) and FIG. 1(b), the forward opening portion 44 is formed in a forward portion of the cowl 40, and is configured to open toward the forward Y1. In the straddled vehicle 1, the traveling wind stream is able to be taken into the inside of the cowl 40 through the forward opening portion 44.

As shown in FIG. 3(a), the cowl 40 has an upper air discharge port 45 and a lower air discharge port 46 serving as air discharge ports for discharging radiator-passing wind streams Wa to the outside of the cowl 40. The upper air discharge port 45 and the lower air discharge port 46 are each disposed left and right of the vehicle. As shown in FIG. 3(a), the upper air discharge ports 45 are formed at the lateral sides of the radiator cover 80. The lower air discharge ports 46 are formed at the downward H2 of the upper air discharge ports 45.

The radiator 60 cools a coolant. As shown in FIG. 1(a), the radiator 60 is disposed in a forward leaning posture. The radiator 60 is disposed at the forward Y1 of the engine 20, and at the downward H2 of the fuel tank 7. As shown in FIG. 1(d), in this embodiment, the radiator 60, which has two side tanks 61, is of a cross-flow type in which the coolant flows from one side tank 61 to the other side tank 61.

As shown in FIG. 1(b) and FIG. 1(c), the radiator core 62 has a wind stream amount increase region 63 in which the amount of the radiator-passing wind stream Wa increases in traveling. As shown in FIG. 1(c), the wind stream amount increase region 63 is a region where the radiator core 62 overlaps none of the fans 70, the front forks 32, and the front fender 9 in a front view.

As shown in FIG. 1(e), the fans 70 are disposed at the rearward Y2 of the radiator core 62. As shown in FIG. 2(a), in the straddled vehicle 1 of this embodiment, the two fans 70 are arranged in the left-right direction X. More specifically, as shown in FIG. 2(a), the straddled vehicle 1 has two fans 70, namely, a fan 70a disposed at the left X1 and a fan 70b disposed at the right X2 in a front view. As shown in FIG. 1(c), the two fans 70 are disposed so as to overlap the forward member 50 (in this embodiment, the front fork 32) in a front view.

As shown in FIG. 2(a), the fan 70a disposed at the left X1 in a front view rotates counterclockwise in a front view. The fan 70b disposed at the right X2 in a front view rotates clockwise in a front view. That is, the fan 70a and the fan 70b rotate in different rotation directions.

As shown in FIG. 2(a), when the fans 70 rotate, the radiator-passing wind streams Wa generated by rotation of the fans 70 are guided in a guide direction F, which is either the left direction Xa or the right direction Xb, by the radiator cover 80. More specifically, in the straddled vehicle 1, the radiator-passing wind stream Wa generated by rotation of the fan 70a disposed at the left X1 is guided in the left direction Xa by the radiator cover 80. The radiator-passing wind stream Wa generated by rotation of the fan 70b disposed at the right X2 is guided in the right direction Xb by the radiator cover 80.

As shown in FIG. 1(d), the radiator cover 80 covers the radiator core 62 and the fans 70 from the rearward Y2. As shown in FIG. 2(b), the radiator cover 80 covers at least a part of the upper end 62a of the radiator core 62. As shown in FIG. 2(a), the radiator cover 80 covers a part of the wind stream amount increase region 63. The radiator cover 80 covers a region ranging from one to the other of the two fans 70.

As shown in FIG. 1(d), the radiator cover 80 has a rear partition wall portion 81, an upper partition wall portion 82, and a pressure drop portion 83. As shown in FIG. 1(e), the rear partition wall portion 81 is disposed so as to partition a space rearward of the radiator core 62 into a forward space R1 at the forward Y1 and a rearward space R2 at the rearward Y2. With this, the radiator cover 80 restricts an inflow of the radiator-passing wind stream Wa into the rearward space R2. The upper partition wall portion 82 is disposed so as to partition the forward space R1 from an upward space R3 at the upward H1 of the forward space R1. With this, the radiator cover 80 restricts an inflow of the radiator-passing wind stream Wa into the upward space R3.

The pressure drop portion 83 is provided as an opening in the radiator cover 80, and is formed so as to let a part of the radiator-passing wind stream Wa escape to the rearward space R2. As shown in FIG. 2(a), the pressure drop portion 83 is disposed at a position between the two fans 70, the position being opposed to the wind stream amount increase region 63.

With the foregoing configuration, the straddled vehicle 1 is capable of restricting an inflow of the wind stream (radiator-passing wind stream Wa), which has received heat while passing through the radiator core 62, into the rearward space R2. In the straddled vehicle 1, the pressure drop portion 83 is disposed at a position opposed to the wind stream amount increase region 63, in which the amount of the wind stream increases in traveling, and therefore it is possible to suppress a pressure rise in a space behind the radiator core 62 (i.e., the forward space R1, which is behind the wind stream amount increase region 63), to consequently suppress a decrease in the amount of the wind stream passing through the radiator core 62 in traveling (while the fans are not operating). As a result, the straddled vehicle 1 is capable of suppressing a decrease in the amount of the wind stream passing through the radiator 60 in traveling, while suppressing an influence that heat caused by the radiator-passing wind stream Wa gives to the rider and/or the rear components 51 (such as the engine control unit 12).

As shown in FIG. 2(a), the pressure drop portion 83 is disposed such that, in a front view, its position relative to the fan 70a at the left X1 is a position (at the right X2) toward the direction (right direction Xb) different from the guide direction F (left direction Xa) for the fan 70a, and its position relative to the fan 70b at the right X2 is a position (at the left X1) toward the direction (left direction Xa) different from the guide direction F (right direction Xb) for the fan 70b. That is, the pressure drop portion 83 is disposed between the two, left and right fans 70 in a front view.

As shown in FIG. 1(d), the pressure drop portion 83 has a wind stream direction change portion 84, which changes the wind stream direction of the radiator-passing wind stream Wa into the downward direction Ha. In the straddled vehicle 1 of this embodiment, the wind stream direction change portion 84 is configured by four fins provided to the pressure drop portion 83.

As shown in FIG. 2(b), the radiator cover 80 has its lower end 80a arranged farther downward H2 than the upper end 21a of the cylinder head 21. To be more specific, as shown in FIG. 2(b), the radiator cover 80 is configured such that the lower end 80a locates farther downward H2 than the upper end 22a of a forward inclined surface 22 of the engine 20 in a side view.

As shown in FIG. 3(b), the radiator cover 80 is disposed such that its left and right ends are connected to the upper air discharge ports 45. In more detail, as shown in FIG. 3(a) and FIG. 3(b), the radiator cover 80 is disposed at a position adjacent to the upper air discharge ports 45. As shown in FIG. 3(b), the radiator cover 80 has, at its left and right ends, protruding portions 85 protruding toward the lateral sides. As shown in FIG. 3(b), the middle cowl 42 has mounting portions 42a into which the protruding portions 85 are fitted. The mounting portions 42a are formed near the upper air discharge ports 45. The position of the radiator cover 80 relative to the middle cowl 42 is settled by the protruding portions 85 being fitted in the mounting portions 42a. That is, the radiator cover 80 is disposed such that its left and right ends are adjacent to the middle cowl 42 and are connected to the middle cowl 42. Thus, the radiator cover 80 is configured so as to range in the left-right direction from an inner wall 42b of the middle cowl 42, in which the upper air discharge port 45 at the left X1 is formed, to an inner wall 42c of the middle cowl 42, in which the upper air discharge port 45 at the right X2 is formed. Accordingly, the radiator cover 80 functions as a duct that leads the radiator-passing wind stream to the upper air discharge ports 45.

### [Flow of Radiator-Passing Wind Stream When Vehicle Is Stopped]

Next, a flow of the radiator-passing wind stream Wa when the vehicle is stopped will be described with reference to FIG. 4. As shown in FIG. 4(a) and FIG. 4(b), when the vehicle is stopped, the fans 70 operate to generate the radiator-passing wind streams Wa. The radiator-passing wind streams Wa generated by the operation of the fans 70 are guided by the radiator cover 80, and led to the lateral sides and to the downward H2. As mentioned above, the radiator cover 80 is disposed such that its left and right ends are connected to the upper air discharge ports 45. Accordingly, as shown in FIG. 4(c), the radiator-passing wind streams Wa led to the lateral sides along the radiator cover 80 are guided by the upper air discharge ports 45, to be discharged toward the lateral sides of the vehicle. The radiator-passing wind streams Wa led to the downward H2 along the radiator cover 80 are discharged to the outside of the vehicle through the lower air discharge ports 46.

In this manner, when the vehicle is stopped, the radiator-passing wind streams Wa generated by the operation of the fans 70 are, while being guided by the radiator cover 80, discharged toward the lateral sides of the vehicle through the upper air discharge ports 45, and also discharged to the downward H2 through the lower air discharge ports 46.

### [Flow of Radiator-Passing Wind Stream in Traveling]

Next, a flow of the radiator-passing wind stream Wa in traveling will be described with reference to FIG. 5. As shown in FIG. 5(a), in traveling, a traveling wind stream Wb passes through the radiator core 62 while flowing from the forward Y1 to the rearward Y2, and the traveling wind stream Wb becomes the radiator-passing wind streams Wa having heat, flowing to the rearward Y2. As shown in FIG. 5(b), the radiator-passing wind streams Wa are guided by the radiator cover 80, to be led to the lateral sides and to the downward H2.

In traveling, the traveling wind stream Wb passes through the wind stream amount increase region 63 and hits the radiator cover 80 without being hindered by the front forks 32 or the front fender 9, so that the pressure in the space (forward space R1) behind the wind stream amount increase region 63 rises. In this respect, however, the straddled vehicle 1 has the pressure drop portion 83 provided at a position opposed to the wind stream amount increase region 63 of the radiator cover 80. Accordingly, the straddled vehicle 1 is capable of suppressing a decrease in the amount of wind stream in the radiator core 62.

As mentioned above, the radiator cover 80 is disposed such that its left and right ends are connected to the upper air discharge ports 45. In traveling, a pressure difference caused by a flow rate difference between the radiator-passing wind streams Wa and the traveling wind streams Wb flowing from the forward Y1 to the rearward Y2 of the upper air discharge ports 45 puts the surroundings of the upper air discharge ports 45 under a negative pressure. Accordingly, as shown in FIG. 5(c), the radiator-passing wind stream Wa having flowed into the forward space R1 is guided to the vicinities of the upper air discharge ports 45, where the pressure is lowered, and is discharged toward the lateral sides of the vehicle. Due to the traveling wind stream Wb, the radiator-passing wind streams Wa discharged through the upper air discharge ports 45 flow toward the rearward Y2.

In this manner, in traveling, the radiator-passing wind streams Wa guided by the radiator cover 80 are discharged through the upper air discharge ports 45 so as to flow to the rearward Y2 of the vehicle, due to the flow rate difference between the radiator-passing wind streams Wa and the traveling wind streams Wb, which flow from the forward Y1 to the rearward Y2 of the upper air discharge ports 45.

### [Regarding Fixation Structure for Harness]

Next, a harness fixation structure in the surroundings of the head pipe 6c (the vicinity of the head pipe) of the straddled vehicle 1 of this embodiment will be described with reference to FIG. 6.

Recently, there is a trend toward an increased number of electrical parts or an increased size of an electrical part, which is making it difficult to arrange a member such as an electrical part in a space in the vicinity of the head pipe where only a limited space is allowed. For example, in a straddled vehicle of a super-sports type, the vicinity of a head pipe needs to have a high rigidity for the purpose of an improved manipulation performance, and therefore often has a complicated structure, which raises a further problem of a difficulty in effective use of a space in the vicinity of the head pipe. In the straddled vehicle 1, such problems are solved by providing a multi-functional part 100 having a plurality of functions, including a function to fix a harness in the vicinity of the head pipe.

In the straddled vehicle 1 of this embodiment, a portion of the vehicle body frame 6 (front vehicle body frame 6a) in the vicinity of the head pipe to which the head pipe 6c is attached is a casting frame formed by casting. As shown in FIG. 1(a), the straddled vehicle 1 has a tank cover 11 disposed at the forward Y1 of the fuel tank 7.

The multi-functional part 100 is a part formed by injection molding of a resin. As shown in FIG. 6(a), the multi-functional part 100 includes a pillar portion 101 and a flange portion 102. The pillar portion 101 is, while being arranged in the vehicle, disposed along the up-down direction H. The flange portion 102 has a flange shape.

As shown in FIG. 6(b), the multi-functional part 100 includes a connector mounting portion 103 to which a connector is attached, and a holding portion 104 to which a harness or a wire is attached. As shown in FIG. 6(a) and FIG. 6(b), the multi-functional part 100 has, as the holding portion 104, a first holding portion 104a, a second holding portion 104b, a third holding portion 104c, a fourth holding portion 104d, and a fifth holding portion 104e. Each of the holding portions 104 has a hole portion for fixation of the harness or the wire. Attached to each of the holding portions 104 is a resin clamp through which the harness or the wire is inserted.

As shown in FIG. 6(b), the multi-functional part 100 includes frame mounting portions 105 and a cover top mounting portion 106. The frame mounting portions 105 serve as attachment points for the front vehicle body frames 6a. Attached to the cover top mounting portion 106 is a distal end portion (cover top 11a) of the tank cover 11. As shown in FIG. 6(a), the multi-functional part 100 includes an air cleaner mounting portion 107 to which the air cleaner 8 is attached.

As shown in FIG. 6(b), the connector mounting portion 103 supports a main switch connector 111, an immobilizer connector 112, and a grip warmer connector 113. A main harness 114 is attached to the first holding portion 104a and the fourth holding portion 104d. A clutch wire 115 is attached to the second holding portion 104b. A main switch harness 116 and an immobilizer harness 117 are attached to the third holding portion 104c and the fifth holding portion 104e. The main harness 114 has a movable portion M1, which is freely movable, and an immovable portion M2, the movable portion M1 ranging from an end portion (in the vicinity of a handlebar) of the harness disposed at the forward Y1 to a portion of the harness connected to the first holding portion 104a, the immovable portion M2 ranging from the first holding portion 104a to the rearward Y2 of the first holding portion 104a (see FIG. 6(b)). The main switch harness 116 and the immobilizer harness 117 each have a movable portion M1, which is freely movable, and an immovable portion M2, the immovable portion M2 ranging from the connector to a portion of the harness connected to the fifth holding portion 104e, the movable portion M1 ranging from the fifth holding portion 104e to the forward Y1 of the fifth holding portion 104e (to the vicinity of the handlebar) (see FIG. 6(b)).

As shown in FIG. 6(c), the multi-functional part 100, with connectors, harnesses, and the like fixed thereto, is attached to the front vehicle body frames 6a so as to work as a bridge in the up-down direction H. To be specific, the multi-functional part 100 is disposed such that the pillar portion 101 extends in the up-down direction H, and is attached to the front vehicle body frames 6a with bolts inserted through the frame mounting portions 105. This can hold the harnesses and the connectors while settling the position of them as one unit. The cover top 11a is attached to the cover top mounting portion 106. The air cleaner 8 is attached to the air cleaner mounting portion 107.

As described above, the multi-functional part 100 has the functions (1) to (4): (1) a function to fix parts such as the harnesses in the vicinity of the head pipe; (2) a function to guide the clutch wire 115; (3) a function to fix the air cleaner 8; and (4) a function to fix the cover top 11a.

The straddled vehicle 1 is configured such that the multi-functional part 100, which has a plurality of functions for holding the harnesses, fixing the connectors, the air cleaner 8, and the cover top 11a, and the like, is disposed so as to work as a bridge in the up-down direction H relative to the front vehicle body frames 6a. Accordingly, the straddled vehicle 1 achieves a simplified routing and an effective use of a limited space inside the front vehicle body frames 6a.

### [Regarding Structure of Surroundings of Hole Portion of Tank Cover]

Next, a hole portion 11b of the tank cover 11, and a part (water receiving part 120) disposed near the hole portion 11b will be described with reference to FIG. 7.

In some case, a straddled vehicle may have a through hole (hole portion) provided in a tank cover, for design purposes or for the purpose of using a traveling wind stream entering and exiting the tank cover to reduce self-heating of an electrical part disposed inside a vehicle body (such as an engine control unit disposed rearward of the tank cover). In some case, a straddled vehicle may have an air cleaner disposed below a tank cover. If a hole portion is provided in the tank cover while the air cleaner is disposed below the tank cover, it is feared that water may enter the air cleaner because there is a possibility of break-in of water into the tank cover through the hole portion. In this respect, to suppress break-in of water into the air cleaner through the hole portion provided in the tank cover, a rubber plate or the like may be disposed.

If a rubber plate is disposed, however, a passage for a traveling wind stream coming from the forward cannot be formed, which raises a problem of a difficulty in reducing self-heating of an electrical part installed near (e.g., upward or rearward of) the air cleaner. Thus, in a straddled vehicle having an air cleaner disposed below a tank cover and an electrical part disposed near the air cleaner, it has been difficult to obtain both suppression of entry of water into the air cleaner and formation of a passage for a traveling wind stream, while providing a hole portion in the tank cover.

The straddled vehicle 1 of this embodiment, in which the water receiving part 120 is mounted to the back side of the hole portion 11b formed in the tank cover 11, achieves both suppression of entry of water into the air cleaner 8 and formation of a passage for a traveling wind stream. As shown in FIG. 7(a), the straddled vehicle 1 of this embodiment has the air cleaner 8 disposed at the downward H2 of the tank cover 11. The straddled vehicle 1 has an electrical part (in this embodiment, the engine control unit 12) disposed at the downward H2 of the fuel tank 7. The engine control unit 12 is disposed at the rearward Y2 of the air cleaner 8.

As shown in FIG. 7(a), the straddled vehicle 1 has the hole portion 11b provided in the tank cover 11. The hole portions 11b are formed at the left and right lateral sides of the tank cover 11, respectively. As shown in FIG. 7(c), the water receiving part 120 is attached to a back surface 11c of the tank cover 11, and is positioned at the downward H2 of the hole portion 11b.

As shown in FIG. 7(b), the water receiving part 120 has a plane-shaped portion opposed to the hole portion 11b. The water receiving part 120 intercepts an inflow of water toward the air cleaner 8. In addition, the water receiving part 120, while being attached to the tank cover 11, serves as a passage for air (see the arrow B in FIG. 7(b)). With this, the straddled vehicle 1 achieves suppression of entry of water into the air cleaner 8 and a reduction of self-heating of an electrical part (in this embodiment, the engine control unit 12), while providing the hole portions 11b in the tank cover 11.

### [Load Bearing Structure under Seat]

Next, a load bearing structure at the downward H2 of the seat 4 (in an under-seat area) will be described with reference to FIG. 8.

In the straddled vehicle 1 of this embodiment, the seat 4 is a single seat for one person. The vehicle body frame 6 of the straddled vehicle 1 includes rear frames 6b, which constitute a frame at the downward H2 of the seat 4. As shown in FIG. 8, a battery 140 is disposed between the left and right rear frames 6b.

In a case of a straddled vehicle whose seat is a single seat for one person, which needs to provide a more comfortable feeling of grounding for a rider seated, it may sometimes be required that a configuration serving as a load bearing be set near a hip point (a position at which the rider is seated). Especially in a straddled vehicle of a super-sports type, a more comfortable feeling of grounding is highly demanded. To meet the demand for the more comfortable feeling of grounding, it is conceivable that a member serving as a load bearing be attached to a rear frame.

Here, in some case, another part (such as an exterior cover) may be fastened to the rear frame. Thus, in order that a load bearing be set to the rear frame, it is necessary that setting of the load bearing for a single seat and fastening of another part are both achieved on a single bearing surface of the rear frame. On the other hand, there has been a problem that it is difficult for a bearing surface of a rear frame to have both a load bearing for a seat and fastening of another part. For example, a situation may arise in which the position of attachment of another part such as an exterior cover to the rear frame overlaps the position of attachment of a member serving as a load bearing to make fastening of these parts to the rear frame difficult. The straddled vehicle 1 of this embodiment is provided with a sheet metal member 130 having a plurality of functions, and thus achieves both a load bearing portion C for the seat 4 and fastening of another part.

As shown in FIG. 8, the sheet metal member 130 is attached to the rear frames 6b so as to bridge the left and right rear frames 6b. An exterior cover 150 is fastened to the left and light ends of the sheet metal member 130. The sheet metal member 130 is disposed at the downward H2 of a hip point Ph. The sheet metal member 130 is disposed at the upward H1 of the battery 140. Provided between the sheet metal member 130 and the battery 140 is a damper (not shown).

As described above, the sheet metal member 130 has: a function to bear a load of the seat 4; a function to suppress, from the upward H1, a vibration coming from the battery 140 disposed at the downward H2 of the seat 4 via the damper (not shown); and a function to fix the exterior cover 150. With this, the straddled vehicle 1 achieves both setting of a load bearing for the seat 4 and setting of fastening of another part, and also provides a more comfortable feeling of grounding.

### (Other Embodiments)

The embodiments and variations, of which at least either one of description or illustration has been given herein, are for ease of understanding the present disclosure, and not for limiting the concept of the present disclosure. The foregoing embodiments and variations may be altered and/or adapted without departing from the scope of the present disclosure. The scope encompasses equivalent elements, modifications, omissions, combinations (for example, a combination of features of any embodiment and any variation), adaptations and/or alterations as would be appreciated by those skilled in the art based on the embodiments disclosed herein. The limitations in the Claims are to be broadly interpreted based on the language employed in the Claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively.

### Reference Signs List

- 1: straddled vehicle
- 9: front fender (forward member)
- 32: front fork (forward member)
- 50: forward member
- 60: radiator
- 62: radiator core
- 63: wind stream amount increase region
- 70: fan
- 70a: fan
- 70b: fan
- 80: radiator cover
- 81: rear partition wall portion
- 83: pressure drop portion
- R1: forward space
- R2: rearward space
- Wa: radiator-passing wind stream

## Claims

1. A straddled vehicle (1) comprising:
a radiator (60) including a radiator core (62) for cooling a coolant;
a fan (70, 70a, 70b) disposed farther rearward than the radiator core (62); and
a forward member (50) disposed farther forward than the radiator core (62), the forward member (50) overlapping at least a part of the radiator core (62) in a front view,
the straddled vehicle (1) being configured such that a fuel tank (7) and/or an air cleaner (8) is/are at least partially disposed farther upward than an engine (20) and in a top view, disposed between left and right vehicle body frames (6) extending from a head pipe (6c) to a seat (4),
the straddled vehicle (1) comprising a radiator cover (80) that covers at least a part of the radiator core (62) and the fan (70, 70a, 70b) from rearward,
the radiator cover (80) being configured to cover at least a part of a wind stream amount increase region (63) in which the amount of a radiator-passing wind stream having passed through the radiator core (62) increases in traveling, the wind stream amount increase region (63) being a region where the radiator core (62) overlaps neither the fan (70, 70a, 70b) nor the forward member (50) in a front view,
the radiator cover (80) having a rear partition wall portion (81) disposed so as to partition a space rearward of the radiator core (62) into a forward space (R1) at the forward and a rearward space (R2) at the rearward, to restrict an inflow of the radiator-passing wind stream into the rearward space (R2),
the radiator cover (80) having a pressure drop portion (83) for letting a part of the radiator-passing wind stream escape to the rearward space (R2), the pressure drop portion (83) being disposed at a position opposed to the wind stream amount increase region (63).

2. The straddled vehicle (1) according to claim 1, wherein
the radiator cover (80) has an upper partition wall portion (82) disposed so as to cover at least a part of the upper end of the radiator core (62) and so as to partition the forward space (R1) from an upward space (R3) upward of the forward space (R1), to restrict an inflow of the radiator-passing wind stream into the upward space (R3).

3. The straddled vehicle (1) according to claim 1 or 2, wherein
the pressure drop portion (83) includes an opening in the radiator cover (80) formed so as to let a part of the radiator-passing wind stream escape to the rearward space (R2).

4. The straddled vehicle (1) according to any of claims 1 to 3, wherein
when the fan (70, 70a, 70b) rotates, the radiator-passing wind stream generated by rotation of the fan (70, 70a, 70b) is guided in a guide direction by the radiator cover (80), the guide direction being either a left direction (Xa) or a right direction (Xb), and
the pressure drop portion (83) is disposed, in a front view, at a position relative to the fan (70, 70a, 70b) that exists in one of the left direction (Xa) or the right direction (Xb), the one of the left direction (Xa) or the right direction (Xb) being a direction different from the guide direction.

5. The straddled vehicle (1) according to any of claims 1 to 4, wherein
the fan (70, 70a, 70b) comprises two fans (70a, 70b) disposed rearward of the radiator core (62), and
the radiator cover (80) covers a region ranging from one to the other of the two fans (70a, 70b), with the pressure drop portion (83) being disposed between the two fans (70a, 70b).

6. The straddled vehicle (1) according to any of claims 1 to 5,
the fan (70, 70a, 70b) comprises two fans (70a, 70b) disposed left and right, the two fans (70a, 70b) being configured to rotate in different rotation directions, and
when the fans (70a, 70b) rotate, the radiator-passing wind streams generated by rotation of the two fans (70a, 70b) are guided to lateral sides of the vehicle (1) by the radiator cover (80).

7. The straddled vehicle (1) according to any of claims 1 to 6, wherein
the forward member (50) includes a front fork (32) and a front fender (9), the front fork (32) constituting a steering mechanism, the front fender (9) being attached to a front wheel (2), and
the radiator cover (80) is configured to cover at least a part of the wind stream amount increase region (63) where the radiator core (62) overlaps none of the fan (70, 70a, 70b), the front fork (32), and the front fender (9) in a front view, and to have the pressure drop portion (83) disposed at a position opposed to the wind stream amount increase region (63).

8. The straddled vehicle (1) according to any of claims 1 to 7, wherein
the fan (70, 70a, 70b) is disposed so as to overlap at least a part of the forward member (50) in a front view.

9. The straddled vehicle (1) according to any of claims 1 to 8, wherein
the pressure drop portion (83) has a wind stream direction change portion (84) for changing a wind stream direction of the radiator-passing wind stream into a downward direction (Ha).

10. The straddled vehicle (1) according to any of claims 1 to 9,
further comprising a cowl (40) that covers a lateral side of the radiator core (62), the cowl (40) having an upper air discharge port and a lower air discharge port, the upper air discharge port being formed at a lateral side of the radiator cover (80), the lower air discharge port being formed farther downward than the upper air discharge port, wherein
when the vehicle (1) is stopped, the radiator-passing wind stream generated by operation of the fan (70, 70a, 70b) is guided by the radiator cover (80), to be discharged toward the lateral side of the vehicle (1) through the upper air discharge port while being discharged downward through the lower air discharge port, and
in traveling, the radiator-passing wind stream guided by the radiator cover (80) is discharged through the upper air discharge port so as to flow rearward of the vehicle (1) due to a pressure difference caused by a flow rate difference between the radiator-passing wind stream and a traveling wind stream flowing from the forward to the rearward of the upper air discharge port.

11. The straddled vehicle (1) according to any of claims 1 to 10,
further comprising a cowl (40) that covers a lateral side of the radiator core (62), the cowl (40) having an upper air discharge port (45) formed at a lateral side of the radiator cover (80), wherein
the radiator cover (80) is disposed such that at least one of the left and right ends thereof is connected to the upper air discharge port (45).

12. The straddled vehicle (1) according to any of claims 1 to 11, wherein
the radiator cover (80) has its lower end disposed farther downward than the upper end of a cylinder head (21).
